(19) Europäische Patentamt
European Patent Office
Office européen des brevets

(11) Veröffentlichungsnummer: **0 157 138**
**B1**

(12) # EUROPÄISCHE PATENTSCHRIFT

(45) Veröffentlichungstag der Patentschrift: **10.08.88**

(51) Int. Cl.⁴: **C 08 F 265/04** // (C08F265/04, 220:24)

(21) Anmeldenummer: **85101729.3**

(22) Anmeldetag: **16.02.85**

(54) **Verfahren zur Herstellung von Hydrophobier- und Oleophobiermittel.**

(30) Priorität: **29.02.84 DE 3407361**

(43) Veröffentlichungstag der Anmeldung: **09.10.85 Patentblatt 85/41**

(45) Bekanntmachung des Hinweises auf die Patenterteilung: **10.08.88 Patentblatt 88/32**

(84) Benannte Vertragsstaaten: **BE DE FR GB IT NL**

(56) Entgegenhaltungen:
**FR-A-2 155 133**
**FR-A-2 156 786**
**FR-A-2 319 668**
**US-A-3 068 187**
**US-A-3 407 247**

(73) Patentinhaber: **BAYER AG, Konzernverwaltung RP Patentabteilung, D-5090 Leverkusen 1 Bayerwerk (DE)**

(72) Erfinder: **König, Joachim, Dr., Auf dem Broich 25, D-5068 Odenthal (DE)**
Erfinder: **Süling, Carlhans, Dr., Carl- Leverkus-Strasse 10, D-5068 Odenthal (DE)**
Erfinder: **Lindner, Christian, Dr., Riehlerstrasse 200, D-5000 Köln (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1).Europäisches Patentübereinkommen).



LIBER, STOCKHOLM 1988

**Beschreibung**

Die Erfindung betrifft ein Verfahren zur Herstellung von Emulsionen, die Pfropfcopolymerisate von ethylenisch ungesättigten Perfluoralkylmonomeren auf Acrylatdispersionen enthalten.

Polymere mit Perfluoralkylgruppen sind geeignete Substanzen, um Textilien oder Teppiche hydrophob und oleophob auszurüsten. Bevorzugt werden diese Polymeren in wäßrigen Emulsionen eingesetzt.

Deren Verwendung in Hydrophobier- und Oleophobiermitteln ist z. B. aus der FR-A-2 155 133 und FR-A-2 319 668 bekannt.

Die Herstellung wäßriger Emulsionen nach bekannten Verfahrensweisen der Emulsionspolymerisation ist jedoch schwierig, da ethylenisch ungesättigte Perfluoralkylmonomere extrem wasserunlöslich sind und in Wasser keine stabilen Emulsionen bilden können.

In der US-PS 3 403 122 ist ein Verfahren beschrieben, Perfluoralkylpolymere in wäßrigen Medien nach der Verfahrensweise der Emulsionspolymerisation herzustellen. Zur Erhöhung der Monomerlöslichkeit enthalten diese 5 bis 50 % an wasserlöslichen, organischen Substanzen, z. B. Aceton oder Methanol. Meist erhält man auf diese Weise grobe, wenig lagerstabile Dispersionen. Zudem sind wasserlösliche, organische Solventien wie Aceton oder Methanol Fällmittel für viele Polymere, so daß dieses Verfahren bei vielen der üblicherweise eingesetzten Copolymerisationsystemen nicht angewendet werden kann.

Die US-PS 3 068 187 beschreibt segmentierte Copolymere, d.h. Block- oder Pfropfcopolymere von ethylenisch ungesättigten Perfluoralkylmonomeren mit ethylenisch ungesättigten Monomeren, die weniger als 10 % Fluor enthalten, sowie die Herstellung nach der Verfahrensweise der Emulsionspolymerisation. Dabei wird das weniger als 10 % Fluor enthaltende Monomer, z. B. Butadien oder Chloropren in wäßriger Emulsion vorpolymerisiert und anschließend oder gleichzeitig das Perfluoralkylmonomer polymerisiert bzw. gepfropft. In diesen Fällen ist der Zusatz von wasserlöslichen Solventien wie Aceton oder Methanol erforderlich um die Emulgierung der Perfluoralkylmonomeren zu bewirken. Diese Solventien setzen jedoch die Stabilität der Emulsion herab. Sogar vollständige Koagulation kann in ungünstigen Fällen eintreten.

Um diese Nachteile zu vermeiden, wird meist das Verfahren der Lösungspolymerisation angewendet. Dabei werden als Reaktionsmedium üblicherweise wasserunlösliche Solventien, z. B. Methylisobutylketon, Halogenkohlenwasserstoffe oder Essigsäureester eingesetzt, die als Lösungsmittel sowohl für die Monomeren als auch für die Polymeren geeignet sind. Durch Emulgierung dieser Polymerlösung in Wasser mit Hilfe spezieller Emulgieraggregate oder Homogenisatoren ist es meist möglich, genügend feinteilige und lagerstabile Dispersionen zu gewinnen. Dieses Verfahren ist jedoch durch die notwendige weitere Verfahrensstufe der Emulgierung umständlich und aufwendig, so daß weiterhin der Wunsch nach einer technisch einfacheren Verfahrensweise z. B. der Emulsionspolymerisation besteht.

Es wurde nun gefunden, daß man lagerstabile, hydrophobierend und oleophobierend wirksame Dispersionen erhalten kann, wenn man in Gegenwart von wäßrigen Acrylatdispersionen ethylenisch ungesättigte Perfluoralkylmonomere, gegebenenfalls in Mischung mit weiteren ethylenisch ungesättigten Perfluoralkylgruppen-freien Comonomeren nach der Verfahrensweise der Pfropfpolymerisation polymerisiert, wobei man zusätzlich mit Wasser nicht mischbare, die Perfluoralkylmonomeren lösende Lösungsmittel sowie Initiatoren verwendet, die in den zugesetzten mit Wasser nicht mischbaren Lösungsmitteln löslich sind.

Verfahren zur Herstellung von wäßrigen Dispersionen von Pfropfcopolymerisaten, dadurch gekennzeichnet, daß man als Pfropfgrundlage wäßrige Acrylatdispersionen mit 10 bis 80 Gew.-% Feststoff einsetzt und darauf 20 bis 90 Gew.-% (bezogen auf Gesamtfeststoff) ethylenisch ungesättigte Perfluoralkylmonomere mit mindestens vier perfluorierten Kohlenstoffatomen, in Mischung mit 0 bis 60 Gew.-% bezogen auf Gesamtfeststoff, wobei die Summe aller Prozentangaben 100 % beträgt, weiteren ethylenisch ungesättigten, perfluoralkylgruppenfreien Comonomeren aufpolymerisiert unter Zusatz von mit Wasser nicht mischbaren, die Perfluoralkylmonomeren lösenden Lösungsmitteln sowie Initiatoren, die in den zugesetzten mit Wasser nicht mischbaren Lösungsmitteln löslich sind.

Wäßrige Acrylatdispersionen sind bekannt. Sie stellen Homo- oder Copolymere von Alkyl(meth)acrylaten mit weiteren Vinylmonomeren dar. Zu den geeigneten polymerisierbaren (Meth)-acrylsäureestern gehören z. B. $C_1$-$C_8$-Alkylester wie Methylmethacrylat, Ethylacrylat, Butylacrylat, Isobutylacrylat, Octylacrylat oder 2-Ethylhexylacrylat, Halogenalkylester wie Chlorethylacrylat und aromatische Ester wie Benzyl- oder Phenethylacrylat. Beispiele für weitere copolymerisierbare Vinylmonomere sind Acrylnitril, Vinylchlorid, Vinylacetat, Styrol, Butadien, Acrylsäure, Methacrylsäure oder Acrylamid. Die Acrylatpolymeren können nicht vernetzt, teil- oder hochvernetzt sein. Zur Vernetzung können z. B. polyfunktionelle Monomere copolymerisiert werden. Beispiele sind Ester von ungesättigten Carbonsäuren mit einem Polyol, z. B. Ethylenglykoldimethacrylat oder Diethylenglykoldimethacrylat, Ester einer mehrbasischen Carbonsäure mit einem ungesättigten Alkohol wie Triallylcyanurat oder Triallylisocyanurat, Divinylverbindungen wie Divinylbenzol, Ester ungesättigter Carbonsäuren mit ungesättigten Alkoholen wie Allylmethacrylat und 1,3,5-Triacryloylhexahydro-s-triazin.

Bevorzugt sind Acrylatlatices, die eine hohe Bepfropfbarkeit aufweisen. Das kann z. B. erreicht werden, wenn man die Acrylate mit geringen Mengen konjugierter Diene wie Butadien copolymerisiert oder mit pfropfaktiven Monomeren copolymerisiert. Als pfropfaktive Monomere sind z. B. zu nennen Allyl(meth)acrylat, Triallyl(iso)cyanurat und Citronensäuretriallylester.

Geeignet sind weiterhin Acrylatlatices, die z. B. einen Kern-Mantel-Aufbau aufweisen, wobei der Kern in Vernetzung oder Zusammensetzung verschieden sein kann von der Acrylathülle der oben beschriebenen Zusammensetzung. Solche Kern-Mantel-Acrylatkautschuke werden z. B. in der EP-A 34748 beschrieben.

Die obengenannten Acrylatdispersionen werden als Pfropfgrundlage in Konzentrationen von 10 bis 80 Gew.-% Feststoff (bezogen auf Gesamtfeststoff nach der Pfropfreaktion) eingesetzt. Zur Pfropfreaktion werden weiterhin 20 bis 90 Gew.-% (bezogen auf Gesamtfeststoff) an ethylenisch ungesättigten Perfluoralkylmonomeren, gegebenenfalls in Mischung mit Comonomeren, die keine Perfluoralkylgruppen enthalten, eingesetzt.

Die zur Pfropfreaktion eingesetzten ethylenisch ungesättigten Perfluoralkylmonomeren enthalten gesättigte, perfluorierte, aliphatische Alkylgruppen, die linear verzweigt oder gegebenenfalls auch cyclisch sein können. Sie enthalten mindestens vier perfluorierte Kohlenstoffatome. Geeignet sind Acrylate oder Methacrylate der Formel (1a) und (1b),

$$C_nF_{2n+1}CH_2CH_2O\underset{\underset{O}{\|}}{C}-\underset{\underset{R}{|}}{C}=CH_2 \qquad (1a),$$

$$C_nF_{2n+1}SO_2\underset{\underset{R'}{|}}{N}-CH_2CH_2O\underset{\underset{O}{\|}}{C}-\underset{\underset{R}{|}}{C}=CH_2 \qquad (1b)$$

in welchen

R, H oder $CH_3$

R', H, $CH_3$ $C_2H_5$, $C_3H_7$, $C_4H_9$, $C_5H_{11}$, $C_6H_{13}$ sowie

n eine ganze Zahl von 4 bis 20, vorzugsweise 4 bis 12,

bedeuten.

Beispiele sind N-Methyl-N-perfluorbutansulfonamidoethylmethacrylat, N-Methylperfluoroctansulfonamidoethylacrylat, N-Methyl-N-perfluoroctansulfonamidoethylmethacrylat, N-Ethyl-N-perfluoroctansulfonamidoethylmethacrylat oder N-Propyl-N-perfluoroctansulfonamidoethylacrylat. Mischungen von Perfluoralkylmonomeren können auch eingesetzt werden.

Geeignet als weitere Comonomere sind z. B. ethylenisch ungesättigte Monomere, die mit den Perfluoralkylmonomeren copolymerisieren können, z. B. Butadien, Isopren, Chloropren, Styrol, α-Methylstyrol, p-Methylstyrol, Vinylhalogenide wie Vinylchlorid, Vinylidenchlorid, Vinylidenfluorid, Vinylester wie Vinylacetat, Vinylpropionat, Vinylstearat, Vinylmethylketon, Acrylsäure, Methacrylsäure, Maleinsäureanhydrid, Acrylsäureester oder Methacrylsäureester wie Methylacrylat, Methylmethacrylat, Ethylacrylat, Ethylmethacrylat, Propylacrylat, Butylacrylat, 2- Ethylhexylacrylat oder -methacrylat, Decylacrylat, Laurylacrylat oder -methacrylat, Stearylmethacrylat, N,N-Dimethylaminoethylmethacrylat, 2-Hydroxyethylmethacrylat, 2-Hydroxypropylmethacrylat, Glycidylmethacrylat, Amide wie Acrylamid, Methacrylamid, N-Methylolacrylamid, Acrylnitril, Methacrylnitril oder N-substituierte Maleinimide.

Geeignet sind auch Mischungen dieser Comonomeren.

Diese Comonomeren werden in Mengen von 0 bis zu 60 Gew.-%, bezogen auf Gesamtfeststoff, wobei die Summe aller Prozentangaben auf 100 Gew.-% beträgt, eingesetzt.

Die Pfropfreaktion wird in Gegenwart der Acrylat-Dispersion als Pfropfgrundlage durchgeführt. Dabei werden die ethylenisch ungesättigten Perfluoralkylmonomeren sowie gegebenenfalls die perfluoralkylgruppenfreien Comonomeren der Vorlage in flüssiger Form, z. B. als Monomergemisch, als Lösung oder als wäßrige Emulsion zudosiert und z. B. mit radikalischen Initiatoren auf die Pfropfgrundlage aufpolymerisiert bzw. aufgepfropft. Zur Bereitung der Lösung oder der wäßrigen Emulsion werden in Wasser schwerlösliche oder unlösliche Lösungsmittel eingesetzt, die jedoch als Lösungsmittel für die Perfluoralkylmonomeren sowie die gegebenenfalls verwendeten perfluoralkylgruppen-freien Comonomeren geeignet sind. Beispiele sind Ketone wie Methylisobutylketon, Fettsäureester wie Essigsäuremethylester, Essigsäureethylester, Essigsäurebutylester, Propionsäureethylester oder Halogenkohlenwasserstoffe wie Methylenchlorid, Chloroform, Tetrachlorkohlenstoff, Tetrachlorethan, Fluortrichlormethan, 1,1,2-Trifluor-1,2,2-trichlorethan. Gegebenenfalls kann auch das Comonomere, welches perfluoralkylgruppenfrei ist, als Lösungsmittel für das Perfluoralkylmonomere dienen.

Die Pfropfreaktion kann in Gegenwart von üblichen radikalbildenden Initiatoren, die in den zugesetzten wasserunlöslichen Lösungsmitteln und vorzugsweise in Monomergemisch löslich sind, durchgeführt werden.

Beispiele für Initiatoren sind Peroxide wie Dibenzoylperoxid, Diacetylperoxid, Dilauroylperoxid, Di-tert.butylperoxid, Cumolhydroperoxid, tert. Butylperoctoat und Azoverbindungen wie Azoisobuttersäuredinitril.

Zur Verbesserung der Pfropfausbeuten ist der Einsatz von Pfropfaktivatoren angezeigt, es handelt sich dabei um Substanzen oder Monomere mit einer hohen Übertragungsaktivität, die bei geringer Einsatzmenge die Pfropfausbeuten erhöhen können. Beispiele sind Olefine wie Propylen oder Isobutylen, Vinylchlorid, Vinylacetat oder Triallylcyanurat. Ebenso ist die Verwendung von Reglern, z. B. Allylverbindungen oder Mercaptanen zur Einstellung der Molgewichte möglich.

Zur Stabilisierung der Dispersionen können übliche anionenaktive, kationenaktive oder nichtionische Emulgatoren eingesetzt werden. Beispiele für anionenaktive Emulgatoren sind Alkylsulfonate, Alkylarylsulfonate, Fettalkoholsulfate oder Sulfobernsteinsäureester, Perfluoralkylgruppen-enthaltende Emulgatoren wie Ammonium- oder Tetraethylammoniumsalze der Perfluoroctansulfonsäure oder das

Kaliumsalz des N-Ethyl-N-perfluoroctansulfonylglycins. Beispiele für kationenaktive Emulgatoren sind quartäre Ammonium- oder Pyridiniumsalze, z. B. Stearyldimethylbenzylammoniumchlorid oder N,N,N-Trimethyl-N-perfluoroctansulfonamidopropyl-ammoniumchlorid. Beispiele für nichtionische Emulgatoren sind Polyglykolether, z. B. Ethylenoxid/Propylenoxid-Block- oder -Copolymere, Umsetzungsprodukte von Ethylenoxid oder Propylenoxid mit Fettalkoholen, Alkylphenolen, Fettsäuren, Fettsäureamiden, verestertem Sorbit oder mit N-Alkyl-N-perfluoroctansulfonylglycin.

Besonders geeignet sind Kombinationen von nichtionischen Emulgatoren mit kationenaktiven bzw. anionenaktiven Emulgatoren. Es kann empfehlenswert sein, die Stabilisierung z. B. durch Verwendung gleichartig geladener Emulgatoren auf das Emulgatorsystem der Acrylatdispersion abzustimmen.

Die erfindungsgemäß hergestellten Pfropfcopolymerisate können in Form wäßriger, stabiler Dispersionen mit Feststoffgehalten von vorzugsweise 5 bis 50 Gew.-% anfallen. Ein besonderer Vorteil ist, daß die Dispersionen zur Entfernung von Lösungsmitteln oder von flüchtigen Restmonomeren in üblichem Destillationsverfahren, z. B. in Rotationsverdampfern oder Dünnschichtern entgast werden können, ohne daß im Gegensatz zu vielen bekannten Emulsionen mit Perfluoralkylpolymeren Koagulation entritt. Nach der Entgasung werden geruchsfreie Dispersionen erhalten, die eine hohe Lagerstabilität aufweisen.

Aus den erfindungsgemäß hergestellten Dispersionen lassen sich Filme herstellen, die eine hervorragende Hydrophobie und Oleophobie aufweisen. Die Dispersionen sind hervorragend z. B. als Imprägniermittel geeignet, um natürliche und technische Materialien, z. B. Textilien aus natürlichen und synthetischen Fasern, Teppiche, Papier, Felle und Leder öl- und wasserabstoßend auszurüsten.

**Beispiel 1**

Herstellung einer Acrylatdispersion

In einem Reaktor werden bei 67° C unter Rühren vorgelegt:

| | |
|---|---|
| 750 g | entionisiertes Wasser |
| 2 g | Natrium-($C_{12}$-$C_{14}$)-alkylsulfonat |

Nach Initiierung mit einer Lösung von 2 g Kaliumperoxodisulfat in 50 g Wasser werden innerhalb 5 h bei 67° C folgende Lösungen getrennt eingespeist:

| | |
|---|---|
| Lösung 1 | 750 g Butylacrylat |
| | 750 g Styrol |
| | 5 g Triallylcyanurat |
| Lösung 2 | 25 g Natrium-($C_{12}$-$C_{14}$) alkylsulfonat |
| | 1.790 g entionisiertes Wasser |

Anschließend polymerisiert man 4 h bei 67° C nach. Der erhaltene Latex besitzt einen Feststoffgehalt von 36,5 Gew.-%. Das Polymerisat besitzt einen Gelgehalt von 92 Gew.-%. Die Latexteilchengrößen ($d_{50}$-Wert) beträgt 190 nm (Durchmesser).

**Beispiel 2**

Beispiel 1 wird wiederholt mit der Änderung, daß in Lösung 1 kein Triallylcyanurat eingesetzt wird.

Der erhaltene Latex besitzt einen Feststoffgehalt von 36,7 Gew.-%. Das anfallende Polymer ist löslich in organischen Lösungsmitteln. Die Latexteilchengröße ($d_{50}$ Wert) beträgt 150 nm (Durchmesser).

**Beispiel 3**

Man bereitet folgende Lösungen bei 70° C:

| | | |
|---|---|---|
| Lösung 1 | 92,8 g | N-Methyl-N-perfluoroctansulfonamidoethylmethacrylat |
| | 23,2 g | Stearylmethacrylat |
| | 174,0 g | Methylisobutylketon |
| | 6,0 g | Polyglykolether des Sorbitanmono-nooleats ("Tween 80"F®) |
| Lösung 2 | 302,0 g | entionisiertes Wasser |
| | 6,0 g | Kaliumsalz des N-Ethyl-N-perfluoroctansulfonylglycins |

Durch Mischen von Lösung 1 und 2 mit Hilfe eines Ultraschall-Dispergators bereitet man eine Monomeremulsion 3, die zur nachfolgenden Pfropfreaktion eingesetzt wird:

In einen Rührkolben gibt man als Vorlage 300 g einer Acrylat-Dispersion (hergestellt nach Beispiel 1) und erwärmt unter $N_2$ auf 75° C. Bei 75° C dosiert man innerhalb 2 h gleichmäßig:

| | |
|---|---|
| 600 g | Monomeremulsion 3 sowie eine Lösung von |
| 6,0 g | Dilauroylperoxid in 100 g Methylisobutylketon |

Anschließend rührt man 1 h bei 75° C nach und verdünnt mit 500 g entionisiertem Wasser.

Zur Entgasung zieht man am Rotationsverdampfer bei 60° C und 200 mbar ca. 400 g Destillat ab. Man erhält als Rückstand 1.100 g einer stabilen, fast geruchsfreien Dispersion ohne Feststoffausfall

| | |
|---|---|
| Feststoffgehalt | 20,6 % |
| Fluorgehalt im Feststoff | 16,8 % |

**Beispiel 4**

Man bereitet eine Monomeremulsion analog Beispiel 3 bei 70° C aus

| | | |
|---|---|---|
| Lösung 1 | 69,6 g | N-Methyl-N-perfluoroctansulfonamidoethylmethacrylat |
| | 46,4 g | Butylacrylat |
| | 174,0 g | Methylisobutylketon |
| | 6,0 g | Polyglykolether des Sorbitanmonooleats ("Tween 80" F®) |
| Lösung 2 | 302,0 g | entionisiertes Wasser |
| | 6,0 g | Kaliumsalz des N-Ethyl-N-perfluoroctansulfonylglycins |

In einen Rührkolben gibt man als Vorlage 300 g einer Acrylat-Dispersion (hergestellt nach Beispiel 2) und erwärmt unter $N_2$ auf 75° C. Bei 75° C dosiert man innerhalb 2 h gleichmäßig 600 g Monomeremulsion 3 zu sowie eine Lösung von 6,0 g Dilauroylperoxid in 100 g Methylisobutylketon. Anschließend rührt man 1 h bei 75° C nach und verdünnt mit 400 g entionisiertem Wasser.

Die Dispersion kann am Rotationsverdampfer bei 60° C und 200 mbar unter Abziehen von ca. 400 g Destillat entgast werden. Man erhält 1.000 g einer stabilen, fast geruchsfreien Dispersion ohne Feststoffausfall

| | |
|---|---|
| Feststoffgehalt | 22,0 % |
| Fluorgehalt im Feststoff | 14,4 % |

**Beispiel 5**

Man bereitet eine Monomeremulsion analog Beispiel 3 bei 70° C aus

| | |
|---|---|
| Lösung 1 | 80,0 g N-Methyl-N-perfluoroctansulfonamidoethylmethacrylat |
| | 20,0 g Stearylmethacrylat |
| | 1,0 g Triallylcyanurat |
| | 150,0 g Methylisobutylketon |
| | 5,15 g Polyglykolether des Sorbitanmonooleats ("Tween 80"®) |
| Lösung 2 | 260,0 g entionisiertes Wasser |
| | 5,15 g Kaliumsalz des N-Ethyl-N-perfluoroctansulfonylglycins |

In einen Rührkolben gibt man als Vorlage 250 g einer Acrylatdispersion (hergestellt nach Beispiel 1) und erwärmt unter $N_2$ auf 75° C. Innerhalb 2 h dosiert man bei 75° C gleichmäßig 510 g der Monomeremulsion sowie eine Lösung von 5,0 g Dilauroylperoxid in 100 g Methylisobutylketon zu und rührt 1 h bei 80° C nach.

Nach Verdünnen mit 400 g entionisiertem Wasser zieht man am Rotationsverdampfer bei 80° C und 200 mbar ca. 400 g Destillat ab. Man erhält 850 g einer stabilen, fast geruchsfreien Dispersion ohne Feststoffausfall.

| | |
|---|---|
| Feststoffgehalt | 21,8 % |
| Fluorgehalt im Feststoff | 21,0 % |

**Patentansprüche**

1) Verfahren zur Herstellung von wäßrigen Dispersionen von Pfropfcopolymerisaten, dadurch gekennzeichnet, daß man als Pfropfgrundlage wäßrige Acrylatdispersionen mit 10 bis 80 Gew.-% Feststoff einsetzt und darauf 20 bis 90 Gew.-% (bezogen auf Gesamtfeststoff) ethylenisch ungesättigte Perfluoralkylmonomere mit mindestens vier perfluorierten Kohlenstoffatomen, in Mischung mit 0 bis 60 Gew.-% bezogen auf Gesamtfeststoff, wobei die Summe aller Prozentangaben 100 % beträgt, weiteren ethylenisch ungesättigten, perfluoralkylgruppenfreien Comonomeren aufpolymerisiert unter Zusatz von mit Wasser nicht mischbaren, die Perfluoralkylmonomeren lösenden Lösungsmitteln sowie Initiatoren, die in den zugesetzten mit Wasser nicht mischbaren Lösungsmitteln löslich sind.

2) Verfahren nach Anspruch 1, dadurch gekennzeichnet, daß Pfropfaktivatoren zugesetzt werden.

**Claims**

1. Process for the preparation of aqueous dispersions of graft copolymers, characterised in that aqueous acrylate dispersions having a solids content of from 10 to 80 % by weight are used as graft basis and 20 to 90 % by weight (based on the total solids content) of ethylenically unsaturated perfluoroalkyl monomers containing at least four perfluorinated carbon atoms in admixture with from 0 to 60 % by weight, based on the total solids content, (the sum of all the percentages amounting to 100 %) of other ethylenically unsaturated comonomers which are free from perfluoroalkyl groups are then graft polymerised on the said graft basis with the addition of solvents which are immiscible with water but dissolve the perfluoroalkyl monomers and the

addition of initiators which are soluble in the water-immiscible solvents added.
2. Process according to claim 1, characterised in that graft activators are added.

**Revendications**

1. Procédé de production de dispersions aqueuses de copolymères greffés, caractérisé en ce qu'on utilise comme substrat de greffage des dispersions aqueuses d'acrylate contenant 10 à 80 % en poids de matière solide, sur lesquelles on polymérise 20 à 90 % en poids (par rapport à la matière solide totale) de monomères perfluoralkyliques à non-saturation éthylénique ayant au moins 4 atomes perfluorés de carbone, en mélange avec d'autres comonomères à non-saturation éthylénique, dépourvus de groupes perfluoralkyliques, en quantité de 0 à 60 % en poids par rapport à la matière solide totale, la somme de tous les pourcentages indiqués s'élevant à 100 %, avec addition de solvants non miscibles à l'eau, qui dissolvent les monomères perfluoralkyliques, ainsi que d'initiateurs qui sont solubles dans les solvants ajoutés non miscibles à l'eau.
2. Procédé suivant la revendication 1, caractérisé en ce qu'on ajoute des activateurs de greffage.